# EUROPEAN PATENT SPECIFICATION

(11) **EP 4 221 049 B1**
(45) Date of publication and mention of the grant of the patent: **04.11.2026**
(21) Application number: 23162387.7
(22) Date of filing: 05.09.2018
(51) Int. Cl.: H04L 5/00

(54) **REFERENCE SIGNAL TRANSMISSION METHOD, REFERENCE SIGNAL TRANSMISSION DEVICE, BASE STATION AND USER EQUIPMENT**
REFERENZSIGNALÜBERTRAGUNGSVERFAHREN, REFERENZSIGNALÜBERTRAGUNGSVORRICHTUNG, BASISSTATION UND BENUTZERGERÄT
PROCÉDÉ DE TRANSMISSION DE SIGNAL DE RÉFÉRENCE, DISPOSITIF DE TRANSMISSION DE SIGNAL DE RÉFÉRENCE, STATION DE BASE ET ÉQUIPEMENT UTILISATEUR

(30) Priority: 08.09.2017 CN 201710805104
(43) Date of publication of application: 02.08.2023
(62) Document number(s) of the earlier application(s) in accordance with Art. 76 EPC: 18854508.1 / 3 681 080
(73) Proprietor: Datang Mobile Communications Equipment Co., Ltd., Beijing 100085 (CN)
(72) Inventor: LI, Hui, Beijing, 100191 (CN); GAO, Qiubin, Beijing, 100191 (CN); TAMRAKAR, Rakesh, Beijing, 100191 (CN); CHEN, Runhua, Beijing, 100191 (CN); SU, Xin, Beijing, 100191 (CN); MIAO, Deshan, Beijing, 100191 (CN); HUANG, Qiuping, Beijing, 100191 (CN)
(74) Representative: Studio Torta S.p.A.

(56) References cited:
- NATIONAL INSTRUMENTS: "Discussion on explicit and implicit signaling for PT-RS", vol. RAN WG1, no. Hangzhou; 20170515 - 20170519, 14 May 2017 (2017-05-14), XP051273465, Retrieved from the Internet <URL:http://www.3gpp.org/ftp/Meetings_3GPP_SYNC/RAN1/Docs/> [retrieved on 20170514]
- QUALCOMM INCORPORATED: "Discussion on Bursty Interference Measurement Resources", vol. RAN WG1, no. Prague, Czech Republic; 20170821 - 20170825, 20 August 2017 (2017-08-20), XP051316217, Retrieved from the Internet <URL:http://www.3gpp.org/ftp/Meetings_3GPP_SYNC/RAN1/Docs/> [retrieved on 20170820]
- NOKIA ET AL: "Discussion on PT-RS design for CP-OFDM", vol. RAN WG1, no. Qingdao, P.R. China; 20170627 - 20170630, 26 June 2017 (2017-06-26), XP051300502, Retrieved from the Internet <URL:http://www.3gpp.org/ftp/Meetings_3GPP_SYNC/RAN1/Docs/> [retrieved on 20170626]
- ZTE: "Discussion on RS for phase tracking", vol. RAN WG1, no. Prague, Czechia; 20170821 - 20170825, 20 August 2017 (2017-08-20), XP051315124, Retrieved from the Internet <URL:http://www.3gpp.org/ftp/Meetings_3GPP_SYNC/RAN1/Docs/> [retrieved on 20170820]

## Description

### TECHNICAL FIELD

The present disclosure relates to the technical field of communication applications, and in particular to a reference signal transmission method, a reference signal transmission device, a base station and a user equipment.

### BACKGROUND

Phase noise comes from local oscillators in a transmitter and a receiver, and may affect transmission of multi-carrier signals. Especially in the high frequency band (above 6GHz), influence of the phase noise is more serious, and thus it is necessary to perform phase noise compensation for received signals to ensure the system performance. By introducing a phase tracking reference signal (PTRS) at a transmitting end, phase changes caused by phase noise can be tracked, thereby ensuring that a receiver can estimate the phase noise of the link and compensate the influence of the phase noise.

In the new radio (NR) system, PTRS is transmitted in UE-scheduled frequency band, and may be mapped every one physical resource block (PRB), every two PRBs or every four PRBs, depending on varied frequency domain density. In the PRB including PTRS, each PTRS port is mapped to at least one subcarrier. Each PTRS port corresponds to a group of demodulation reference signal (DMRS) ports, hereinafter referred to as group correspondence. Each DMRS port within the group is affected by the same phase noise source, and this PTRS port is used to compensate for the phase noise of each DMRS port within the group. If there are multiple phase noise sources, multiple PTRS ports are required.

Similar to DMRS, PTRS also needs to be pre-coded for transmission. To compensate for the influence of phase noise, the precoding used by the PTRS is related to the precoding used by the group of DMRS ports corresponding to this PTRS port. Meanwhile, in order to ensure the compensation accuracy, the PTRS should be mapped to the subcarrier where the corresponding DMRS port group is located. Currently, one implementation manner is to pre-define that PTRS port uses a precoding used by a fixed DMRS port in a DMRS port group corresponding to the PTRS port and is mapped to a subcarrier where the DMRS port is located, which is hereinafter referred to as a port correspondence. This fixed DMRS port may be a DMRS port with the smallest index in the group. However, there is no corresponding solution about how to map a PTRS port to a subcarrier where a DMRS port associated with the PTRS port is located.

Document by NATIONAL INSTRUMENTS: "Discussion on explicit and implicit signaling for PT-RS", 3rd generation partnership project (3GPP), vol. RAN WG1, no. Hangzhou, 14 May 2017, R1-1708272, discloses the factors that impact the time and frequency density of PT-RS and how those densities might be configured with different signaling techniques.

Document by QUALCOMM INCORPORATED: "Discussion on bursty interference measurement resources", 3GPP DRAFT, vol. RAN WG1, no. Prague, 20 August 2017, R1-1713415, discloses Discussion on Bursty Interference Measurement Resources.

Document by NOKIA et al.,: "Discussion on PT-RS design for CP-OFDM", 3GPP DRAFT, vol. RAN WG1, no. Qingdao, P.R. China, 26 June 2017, R1-1711308, discloses remaining open issues on DL PT-RS design.

Document by ZTE: "Discussion on RS for phase tracking", 3GPP DRAFT, vol. RAN WG1, no. Prague, 20 august 2017, R1-1712308, discloses PTRS issues including Pre-DFT and Post-DFT PTRS for DFT-S-OFDM and PTRS for CP-OFDM.

However, the above-noted issues are not solved.

### SUMMARY

An object of the present disclosure is to provide a reference signal transmission method, a reference signal transmission device, a base station and a user equipment, which can solve the problem that there is no corresponding solution about how to map a PTRS port to a subcarrier where a DMRS port associated with the PTRS port is located. The invention is set out in the annexed claims.

The embodiments of the present disclosure have the following beneficial effects:
According to technical solutions of the embodiments of the present disclosure, the position information of the target subcarrier for mapping the PTRS port, among subcarriers occupied by the target DMRS port, is implicitly or explicitly indicated to the UE, so that the UE can determine the target subcarrier according to the position information and then obtains PTRS transmitted by the base station on the target subcarrier, thereby achieving the purpose of transmitting PTRS according to the position information and preventing different PTRS ports from being mapped to the same subcarrier and then effectively ensuring orthogonality between different PTRS ports.

### BRIEF DESCRIPTION OF THE DRAWINGS

FIG. 1 is a first working flowchart of a reference signal transmission method according to an embodiment of the present disclosure;
FIG. 2a is a schematic diagram of a first configuration of DMRS according to an embodiment of the present disclosure;
FIG. 2b is a schematic diagram of a second configuration of DMRS according to an embodiment of the present disclosure;
FIG. 2c is a schematic diagram of a third configuration of DMRS according to an embodiment of the present disclosure;
FIG. 2d is a schematic diagram of a fourth configuration of DMRS according to an embodiment of the present disclosure;
FIG. 3 is a second working flowchart of a reference signal transmission method according to an embodiment of the present disclosure;
FIG. 4 is a first mapping diagram of PTRS according to an embodiment of the present disclosure;
FIG. 5 is a second mapping diagram of PTRS according to an embodiment of the present disclosure;
FIG. 6 is a schematic diagram of a base station according to an embodiment of the present disclosure;
FIG. 7 is a first block diagram of a base station according to an embodiment of the present disclosure;
FIG. 8 is a second block diagram of a base station according to an embodiment of the present disclosure;
FIG. 9 is a schematic diagram of a user equipment according to an embodiment of the present disclosure;
FIG. 10 is a first block diagram of a user equipment according to an embodiment of the present disclosure; and
FIG. 11 is a second block diagram of a user equipment according to an embodiment of the present disclosure.

### DETAILED DESCRIPTION

In order to make technical problems to be solved, technical solutions, and advantages of the present disclosure more clearly, detailed description will be provided hereinafter in conjunction with the accompanying drawings and embodiments.

Embodiments of the present disclosure provide a reference signal transmission method, a reference signal transmission device, a base station and a user equipment, which can solve the problem that there is no corresponding solution about how to map a PTRS port to a subcarrier where a DMRS port associated with the PTRS port is located.

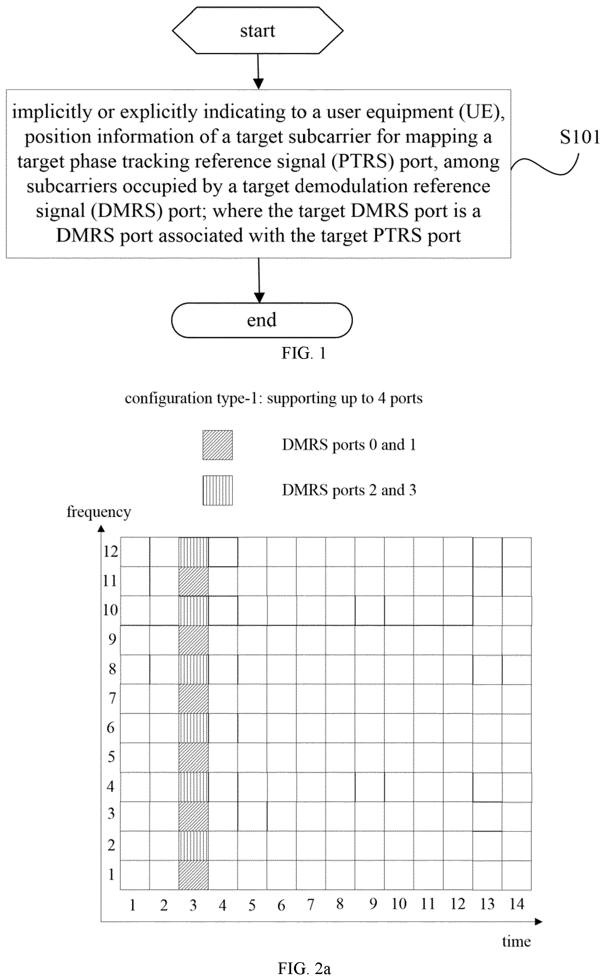

As shown in FIG. 1, one embodiment of the present disclosure provides a reference signal transmission method, applied to a base station, including:
Step S101: implicitly or explicitly indicating to a user equipment (UE), position information of a target subcarrier for mapping a target phase tracking reference signal (PTRS) port, among subcarriers occupied by a target demodulation reference signal (DMRS) port; where the target DMRS port is a DMRS port associated with the target PTRS port.

In one embodiment of the present disclosure, each PTRS port corresponds to a DMRS ports group. Further, each PTRS port corresponds to a preset DMRS port in the DMRS ports group. For example, each PTRS port corresponds to a DMRS port with the smallest port index in the DMRS ports group.

The above position information includes: offset information of a preset reference subcarrier corresponding to the target DMRS port relative to the target subcarrier, position of a subcarrier for mapping the PTRS port among subcarriers occupied by each DMRS port, or offset information of a subcarrier for mapping the PTRS port among subcarriers occupied by each DMRS port relative to a preset reference subcarrier corresponding to the each DMRS port. The target PTRS port is a PTRS port that currently requires subcarrier mapping.

The position information of the target subcarrier for mapping the PTRS port, among subcarriers occupied by the target DMRS port, is indicated to the UE, so that the UE can determine the target subcarrier according to the position information and ensure orthogonality between different PTRS ports.

Further, after the step S101, the method further includes: transmitting a PTRS to the UE on the target subcarrier.

In the reference signal transmission method in the embodiment of the present disclosure, the base station indicates the position information of the target subcarrier to the UE, maps the PTRS to the target subcarrier and transmits it to the UE.

Further, in the above step S101, explicitly indicating to the UE, the position information of the target subcarrier for mapping the PTRS port, among subcarriers occupied by the target DMRS port, includes:
transmitting the position information to the UE by signaling;
where the position information includes: offset information of a preset reference subcarrier corresponding to the target DMRS port relative to the target subcarrier.

The preset reference subcarrier herein is a subcarrier that is predefined in the communication system and is known to the base station and the UE. Specifically, according to order of subcarriers in one PRB, an S-th subcarrier occupied by each DMRS port is defined as a preset reference subcarrier.

Further, before the step of indicating to the UE, the position information of the target subcarrier for mapping the PTRS port, among subcarriers occupied by the target DMRS port, the method further includes:
selecting the target subcarrier for mapping the PTRS port from the subcarriers occupied by the target DMRS port; and determining offset information of the target subcarrier relative to the preset reference subcarrier.

The above offset information may specifically be frequency offset information, subcarrier offset information and/or PRB offset information.

In the embodiment of the present disclosure, according to preset correspondence between PTRS ports and DMRS ports groups, the base station first determines the DMRS ports group corresponding to each PTRS port configured by the base station; then, according to the system agreement, determines one DMRS port in the DMRS ports group as being corresponding to the each PTRS port. Then, the base station selects a target subcarrier for mapping a target PTRS port from subcarriers occupied by a target DMRS port associated with the target PTRS port, and then determines offset information of the target subcarrier relative to the preset reference subcarrier.

A specific application flow of one embodiment of the present disclosure is described below.
(1) The system pre-defines that an S-th subcarrier occupied by each DMRS port in one PRB is a preset reference subcarrier. This preset reference subcarrier is known to the base station and the UE.
(2) For each PTRS port configured by the base station, the base station determines a DMRS port associated with the each PTRS port, and determines avalue of a subcarrier offset S_offset of the each PTRS port. The value of this S_offset may be a positive integer, zero or a negative integer.
(3) The base station informs the UE of the subcarrier offset S_offset of each PTRS port by signaling, simultaneously maps PTRS of each port to the subcarrier determined by S and S_offset in the PRB including the PTRS and transmits it.

In the reference signal transmission method in the embodiment of the present disclosure, the system pre-defines the preset reference subcarrier; the base station determines a position of each PTRS port in the subcarriers where the DMRS port associated with the each PTRS port is located, determines the offset information of the subcarrier for mapping the each PTRS port relative to the reset reference subcarrier, and informs the UE of the offset information by signaling, thereby achieving the purpose of mapping the PTRS port to the subcarrier where the DMRS port associated with the PTRS is located while ensuring orthogonality between different PTRS ports.

Further, in the above step S101, implicitly indicating to the UE, the position information of the target subcarrier for mapping the PTRS port, among subcarriers occupied by the target DMRS port, includes: indicating the position information to the UE by predefinition.

The position information includes: position of a subcarrier for mapping the PTRS port among subcarriers occupied by each DMRS port; or, offset information of a subcarrier for mapping the PTRS port among subcarriers occupied by each DMRS port relative to a preset reference subcarrier corresponding to the each DMRS port.

Further, the each DMRS port is a port in the preset DMRS ports group.

The DMRS ports in the same preset DMRS ports group occupy the same subcarriers, and the DMRS ports in different preset DMRS ports groups occupy different subcarriers. For different DMRS ports of the same preset DMRS ports group, different subcarriers are used for mapping PTRS ports.

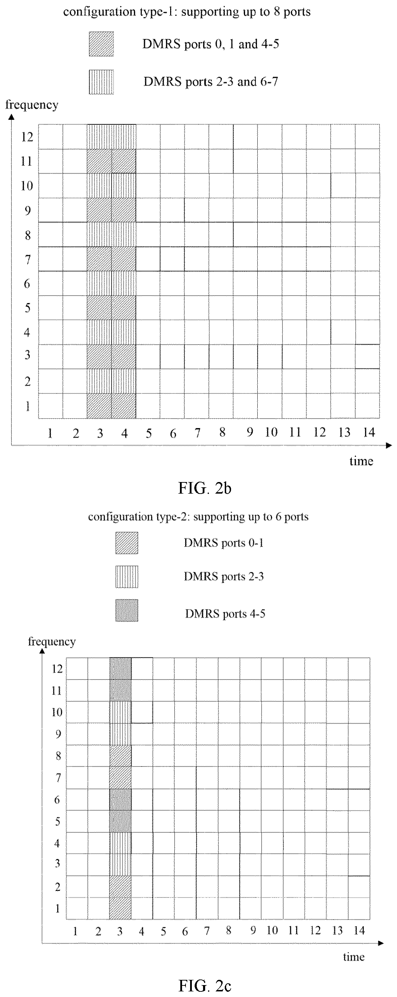

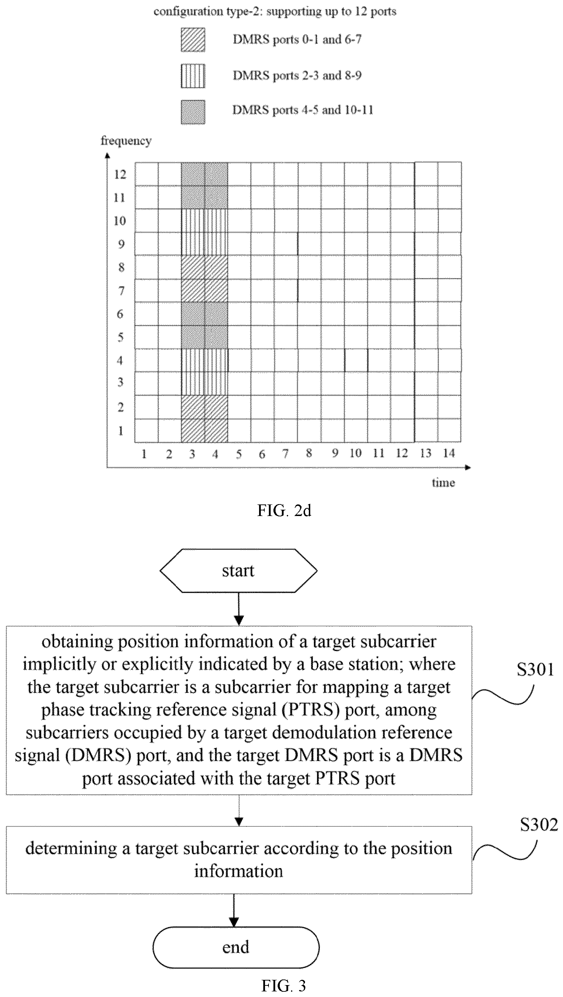

In one embodiment of the present disclosure, configurations of the DMRS include two configuration types, and each configuration type includes two options: one orthogonal frequency division multiplexing (OFDM) symbol and two OFDM symbols. A configuration type-1 is as shown in FIG. 2a and FIG. 2b. A configuration type-2 is as shown in FIG. 2c and FIG. 2d. The maximum number of DMRS ports supported by each DMRS configuration is divided into multiple DMRS ports groups, which may be referred to as subcarrier-position-based DMRS port groups (i.e., preset DMRS port groups). DMRS ports in each subcarrier-position-based DMRS port group occupy the same subcarriers; and DMRS ports in different subcarrier-position-based DMRS port groups different subcarriers.

In each subcarrier-position-based DMRS port group, the system pre-defines a position of a subcarrier for mapping a PTRS port among subcarriers occupied by each DMRS port, or pe-defines offset information of a subcarrier for mapping a PTRS port among subcarriers occupied by each DMRS port relative to a preset reference subcarrier corresponding to the each DMRS port. System-defined information is known to base stations and UEs. In different subcarrier-position-based DMRS port groups, offset information of the subcarrier for mapping the PTRS port may be the same or varied.

For each PTRS port configured by the base station, the base station determines a DMRS port associated with the each PTRS port; according to the above pre-defined position information, the base station determines a subcarrier to which the each PTRS port is mapped, and transmits the PTRS to the UE.

In the reference signal transmission method of one embodiment of the present disclosure, the position information is indicated to the UE through the predefinition, and the PTRS can be transmitted according to the position information. This can prevent different PTRS ports from being mapped to the same subcarrier, thereby ensuring orthogonality between different PTRS ports.

As shown in FIG. 3, one embodiment of the present disclosure further provides a reference signal transmission method, which is applied to a user equipment, including the following steps.

Step S301: obtaining position information of a target subcarrier implicitly or explicitly indicated by a base station; where the target subcarrier is a subcarrier for mapping a target phase tracking reference signal (PTRS) port, among subcarriers occupied by a target demodulation reference signal (DMRS) port, and the target DMRS port is a DMRS port associated with the target PTRS port.

The above position information includes: offset information of a preset reference subcarrier corresponding to the target DMRS port relative to the target subcarrier, position of a subcarrier for mapping the PTRS port among subcarriers occupied by each DMRS port, or offset information of a subcarrier for mapping the PTRS port among subcarriers occupied by each DMRS port relative to a preset reference subcarrier corresponding to the each DMRS port. The target PTRS port is a PTRS port that currently requires subcarrier mapping.

Step S302: determining a target subcarrier according to the position information.

In the reference signal transmission method of one embodiment of the present disclosure, the UE obtains the position information of the target subcarrier implicitly or explicitly indicated by the base station, and determine the target subcarrier according to the position information. In one embodiment of the present disclosure, the UE determines the target subcarrier according to the position information of the target subcarrier indicated by the base station and then performs transmission, thereby effectively ensuring orthogonality between different PTRS ports.

Further, after the above step S302, the method further includes: obtaining PTRS on the target subcarrier and performing phase noise estimation according to the PTRS.

In one embodiment of the present disclosure, by obtaining the PTRS transmitted by the base station on the target subcarrier, it is ensured that a receiver can estimate the phase noise of the link and compensate the influence of the phase noise.

Further, the above step S302 includes:
determining a target DMRS port associated with the target PTRS port; according to the position information, determining the target subcarrier from subcarriers occupied by the target DMRS port.

Specifically, the UE receives correspondence between each PTRS port and DMRS ports group notified by the base station through signaling. According to the correspondence and the system agreement, the UE determines correspondence between each PTRS port and one DMRS in the DMRS ports group; and then, according to the above position information, the UE further determines the target subcarrier from subcarriers occupied by the target DMRS port.

Further, in the above step S301, obtaining position information of a target subcarrier explicitly indicated by a base station, includes:
obtaining the position information transmitted by the base station via signaling;
where the position information includes: offset information of a preset reference subcarrier corresponding to the target DMRS port relative to the target subcarrier.

Further, in the above step S301, obtaining position information of a target subcarrier implicitly indicated by a base station, includes: obtaining the position information of the target subcarrier by predefinition.

The position information includes: position of a subcarrier for mapping the PTRS port among subcarriers occupied by each DMRS port; or, offset information of a subcarrier for mapping the PTRS port among subcarriers occupied by each DMRS port relative to a preset reference subcarrier corresponding to the each DMRS port.

The each DMRS port is a port in a preset DMRS ports group.

The DMRS ports in the same preset DMRS ports group occupy the same subcarriers, and the DMRS ports in different preset DMRS ports groups occupy different subcarriers.

Specific application examples of the present disclosure are described hereinafter.

### Embodiment one

It is assumed that the configuration type of DMRS is the configuration type shown in FIG. 2b.

### Base station:

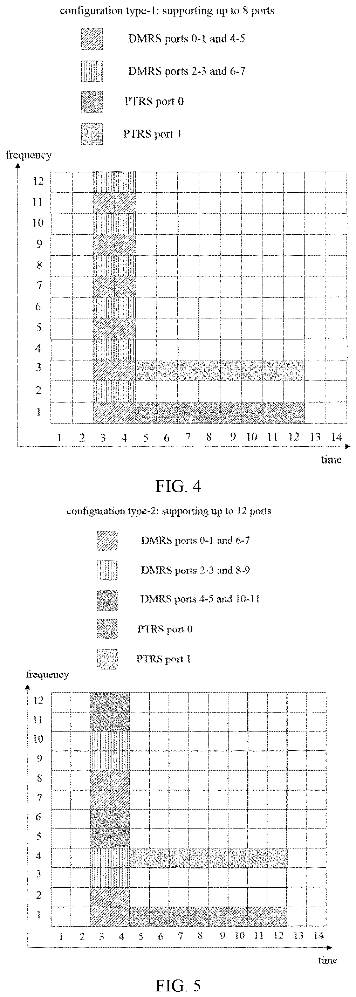

(1) The system pre-defines that a (S=1)-th subcarrier occupied by each DMRS port in one PRB is a preset reference subcarrier. This preset reference subcarrier is known to the base station and the UE. That is, for DMRS ports 0, 1, 4 and 5, the preset reference subcarrier is subcarrier 1; and for DMRS ports 2, 3, 6 and 7, the preset reference subcarrier is subcarrier 2.
(2) The base station configures two PTRS ports. The base station determines that PTRS port 0 has a group correspondence with DMRS ports 0-3 and uses precoding of DMRS port 0, i.e., PTRS port 0 has a port correspondence with DMRS port 0. The base station determines that PTRS port 1 has a group correspondence with DMRS ports 4-7 and uses precoding of DMRS port 4, i.e., PTRS port 1 has a port correspondence with DMRS port 4. It is assumed that the value of S_offset represents the number of offset subcarriers. As can be seen from FIG. 2b, since DMRS port 0 and DMRS port 4 occupy the same subcarriers, the base station determines that the subcarrier offset indication of PTRS port 0 is S_offset0=0, and the subcarrier offset indication of PTRS port 1 is S_offset1=2. It should be noted that the value of S_offset may also indicate other meanings, such as the offset to the S_offset subcarrier occupied by the DMRS port, or the number of offset PRBs.
(3) The base station informs the UE by signaling the subcarrier offset S_offset of each PTRS port. As shown in FIG. 4, PTRS port 0 does not offset on the preset reference subcarrier, and PTRS port 1 offsets 2 subcarriers on the reference subcarrier and is transmitted.

### UE:

(1) The UE receives the group correspondence between PTRS port 0 and DMRS ports 0-3, as well as the group correspondence between PTRS port 1 and DMRS ports 4-7, which are transmitted by the base station through signaling.
(2) According to the group correspondence and the system agreement that each PTRS port has a port correspondence with a DMRS port with the smallest port index in the DMRS ports group, the UE determines that PTRS port 0 has a port correspondence with DMRS port 0, and PTRS port 1 has a port correspondence with DMRS port 4.
(3) The UE receives the subcarrier offset S_offset of each PTRS port notified by the base station via signaling.
(4) the UE determines the subcarrier where PTRS of each port is located according to the preset reference subcarrier S predefined in the system and S_offset, that is, PTRS port 0 does not offset relative to the preset reference subcarrier and is located on the subcarrier 1, and PTRS port 1 offsets 2 subcarriers relative to the reference subcarrier and is located on the subcarrier 3; and then the UE performs phase noise estimation.

### Embodiment 2

It is assumed that the position information is offset information of a subcarrier for mapping the PTRS port among subcarriers occupied by each DMRS port in a preset DMRS port group relative to a preset reference subcarrier corresponding to the each DMRS port.

### Base station:

(1) In FIG. 2a, there are two subcarrier-position-based DMRS port groups; ports 0 and 1 are in one group; ports 2 and 3 are in one group. In FIG. 2b, there are two subcarrier-position-based DMRS port groups; ports 0, 1, 4 and 5 are in one group; ports 2, 3, 6 and 7 are in one group. In FIG. 2c, there are three subcarrier-position-based DMRS port groups; ports 0 and 1 are in one group; ports 2 and 3 are in one group; and ports 4 and 5 are in one group. In FIG. 2d, there are three subcarrier-position-based DMRS port groups; ports 0, 1, 6 and 7 are in one group; ports 2, 3, 8 and 9 are in one group; and ports 4, 5, 10 and 11 are in one group.
(2) For example, in FIG. 2d, in the group of the ports 0, 1, 6, and 7, offset information of PTRS port relative to subcarrier of each DMRS port is defined, as shown in Table 1.

**Table 1**

| | | | | | | |
|---|---|---|---|---|---|---|
| DMRS port | 0 | 1 | | 6 | | 7 |
| offset relative to a first subcarrier of DMRS port (unit: subcarrier) | 0 | 1 | 6 | | 7 | |

In the group of the ports 2, 3, 8 and 9, offset information of PTRS port relative to subcarrier of each DMRS port is defined, as shown in Table 2.

**Table 2**

| | | | | |
|---|---|---|---|---|
| DMRS port | 2 | 3 | 8 | 9 |
| offset relative to a first subcarrier of DMRS port (unit: subcarrier) | 0 | 1 | 6 | 7 |

In the group of the ports 4, 5, 10 and 11, offset information of PTRS port relative to subcarrier of each DMRS port is defined, as shown in Table 3.

**Table 3**

| | | | | |
|---|---|---|---|---|
| DMRS port | 4 | 5 | 10 | 11 |
| offset relative to a first subcarrier of DMRS port (unit: subcarrier) | 0 | 1 | 6 | 7 |

(3) The above steps 1-2 are predefined by the system and are known to the base station and the UE.

(4)The base station configures two PTRS ports. The base station determines that PTRS port 0 has a group correspondence with DMRS ports 0-2 and uses precoding of DMRS port 0, i.e., PTRS port 0 has a port correspondence with DMRS port 0. The base station determines that PTRS port 1 has a group correspondence with DMRS ports 3-5 and uses precoding of DMRS port 3, i.e., PTRS port 1 has a port correspondence with DMRS port 3. According to Table 1, PTRS port 0 is mapped to the first subcarrier of DMRS port 0, i.e., transmitted on subcarrier 1. According to Table 2, PTRS port 1 is mapped to a subcarrier offset by one subcarrier relative to the first subcarrier of the DMRS port 3, i.e., transmitted on subcarrier 4, as shown in FIG. 5.

### UE

(1) The UE receives the group correspondence between PTRS port 0 and DMRS ports 0-2, as well as the group correspondence between PTRS port 1 and DMRS ports 3-5, which are transmitted by the base station through signaling.
(2) According to the group correspondence and the system agreement that each PTRS port has a port correspondence with a DMRS port with the smallest port index in the DMRS ports group, the UE determines that PTRS port 0 has a port correspondence with DMRS port 0, and PTRS port 1 has a port correspondence with DMRS port 3.
(3) According to the mapping relationship in Table 1 and Table 3 which are predefined by the system, the UE between determines that PTRS port 0 does not offset relative to the first subcarrier of DMRS port 0 and is located on the subcarrier 1, and PTRS port 1 offsets 1 subcarrier relative to the first subcarrier of DMRS port 3 and is located on the subcarrier 4; and then the UE performs phase noise estimation.

In the reference signal transmission method in the embodiment of the present disclosure, the position information of the target subcarrier for mapping the PTRS port, among subcarriers occupied by the target DMRS port, is implicitly or explicitly indicated to the UE, so that the UE can determine the target subcarrier according to the position information and then obtains PTRS transmitted by the base station on the target subcarrier, thereby achieving the purpose of transmitting PTRS according to the position information and preventing different PTRS ports from being mapped to the same subcarrier and then effectively ensuring orthogonality between different PTRS ports.

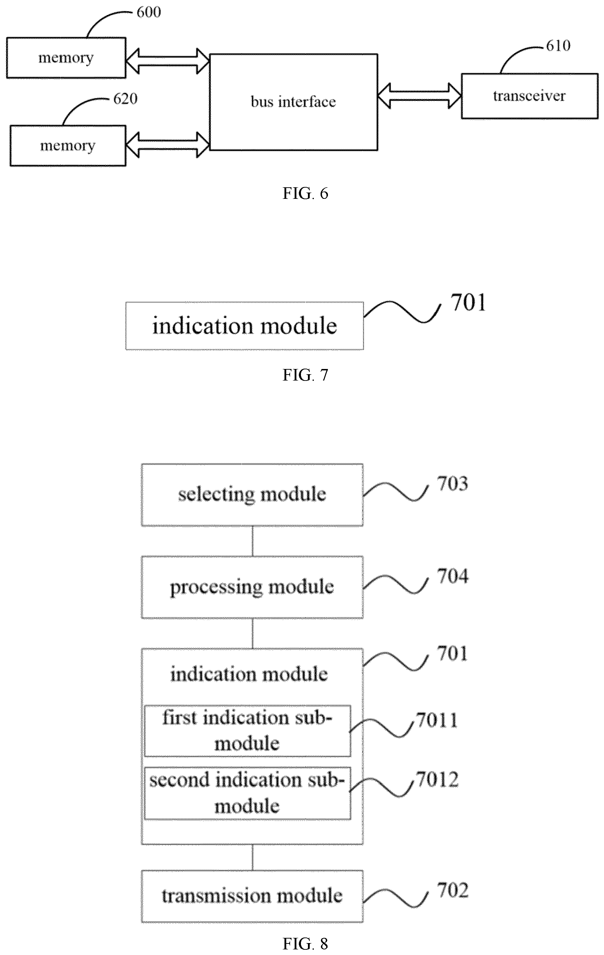

As shown in FIG. 6, one embodiment of the present disclosure further provides a base station, including a memory 620, a processor 600, a transceiver 610, a bus interface, and a computer program stored on the memory 620 and executable on the processor 600. The processor 600 is used to read the program in the memory 620 and execute the following processes:
implicitly or explicitly indicating to a user equipment (UE), position information of a target subcarrier for mapping a target phase tracking reference signal (PTRS) port, among subcarriers occupied by a target demodulation reference signal (DMRS) port; where the target DMRS port is a DMRS port associated with the target PTRS port.

In FIG. 6, the bus architecture may include any number of interconnected buses and bridges. Specifically, one or more processors demonstrated with processor 600 are coupled with various circuits of memory, which is demonstrated with memory 620. The bus architecture may also link various other circuits, such as, peripherals, voltage regulators, and power management circuits, as is known in the art. Thus, in the application, no further description is provided. The bus interface provides an interface. The transceiver 610 may be composed of multiple components, that is, including a transmitter and a receiver, which provide a unit for communicating with various other devices via the transmitting medium. The processor 600 is in charge of managing bus architecture and general processing. The memory 620 may store data used when the processor 600 performs operations.

The processor 600 executes the computer program to further implement the following steps: implicitly or explicitly indicating to a user equipment (UE), position information of a target subcarrier for mapping a target phase tracking reference signal (PTRS) port, among subcarriers occupied by a target demodulation reference signal (DMRS) port; where the target DMRS port is a DMRS port associated with the target PTRS port.

The processor 600 executes the computer program to further implement the following steps: transmitting a PTRS to the UE on the target subcarrier through the transceiver.

The processor 600 executes the computer program to further implement the following steps: transmitting the position information to the UE by signaling through the transceiver.

The processor 600 executes the computer program to further implement the following steps: selecting the target subcarrier for mapping the PTRS port from the subcarriers occupied by the target DMRS port; and determining offset information of the target subcarrier relative to the preset reference subcarrier.

The processor 600 executes the computer program to further implement the following steps: indicating the position information to the UE by predefinition.

The position information includes: position of a subcarrier for mapping the PTRS port among subcarriers occupied by each DMRS port; or, offset information of a subcarrier for mapping the PTRS port among subcarriers occupied by each DMRS port relative to a preset reference subcarrier corresponding to the each DMRS port.

The each DMRS port is a port in the preset DMRS ports group.

The DMRS ports in the same preset DMRS ports group occupy the same subcarriers, and the DMRS ports in different preset DMRS ports groups occupy different subcarriers.

In some embodiments of the present disclosure, a computer readable storage medium is provided and includes a computer program stored thereon. The computer program is executed by a processor to implement the following steps: implicitly or explicitly indicating to a user equipment (UE), position information of a target subcarrier for mapping a target phase tracking reference signal (PTRS) port, among subcarriers occupied by a target demodulation reference signal (DMRS) port; where the target DMRS port is a DMRS port associated with the target PTRS port.

When the program is executed by the processor, all implementation manners of the above method embodiments applied to the base station can be implemented. To avoid repetition, details are not described herein again.

As shown in FIG. 7, one embodiment of the present disclosure further provides a reference signal transmission device, which is applied to a base station, and including:
an indication module 701 used to, implicitly or explicitly indicate to a user equipment (UE), position information of a target subcarrier for mapping a target phase tracking reference signal (PTRS) port, among subcarriers occupied by a target demodulation reference signal (DMRS) port; where the target DMRS port is a DMRS port associated with the target PTRS port.

As shown in FIG. 8, the reference signal transmission device further includes: a transmission module 702 used to transmit a PTRS to the UE on the target subcarrier.

In the reference signal transmission device of the embodiment of the present disclosure, the indication module 701 includes: a first indication sub-module 7011 used to transmit the position information to the UE by signaling.

The position information includes: offset information of the preset reference subcarrier corresponding to the target DMRS port relative to the target subcarrier.

The reference signal transmission device of the embodiment of the present disclosure further includes:
a selecting module 703 used to select the target subcarrier for mapping the PTRS port from the subcarriers occupied by the target DMRS port;
a processing module 704 used to determine offset information of the target subcarrier relative to the preset reference subcarrier.

In the reference signal transmission device of the embodiment of the present disclosure, the indication module 701 includes:
a second indication sub-module 7012 used to indicate the position information to the UE by predefinition.

The position information includes: position of a subcarrier for mapping the PTRS port among subcarriers occupied by each DMRS port; or, offset information of a subcarrier for mapping the PTRS port among subcarriers occupied by each DMRS port relative to a preset reference subcarrier corresponding to the each DMRS port.

In the reference signal transmission device of the embodiment of the present disclosure, each DMRS port is a port in the preset DMRS ports group.

The DMRS ports in the same preset DMRS ports group occupy the same subcarriers, and the DMRS ports in different preset DMRS ports groups occupy different subcarriers.

In the reference signal transmission device in the embodiment of the present disclosure, the position information of the target subcarrier for mapping the PTRS port, among subcarriers occupied by the target DMRS port, is implicitly or explicitly indicated to the UE, so that the UE can determine the target subcarrier according to the position information and then obtains PTRS transmitted by the base station on the target subcarrier, thereby achieving the purpose of transmitting PTRS according to the position information and preventing different PTRS ports from being mapped to the same subcarrier and then effectively ensuring orthogonality between different PTRS ports.

It should be noted that the device is a device corresponding to the above method embodiment applied to the base station. All implementation manners in the above method embodiments are applicable to the device embodiment, and the same technical effects can be achieved.

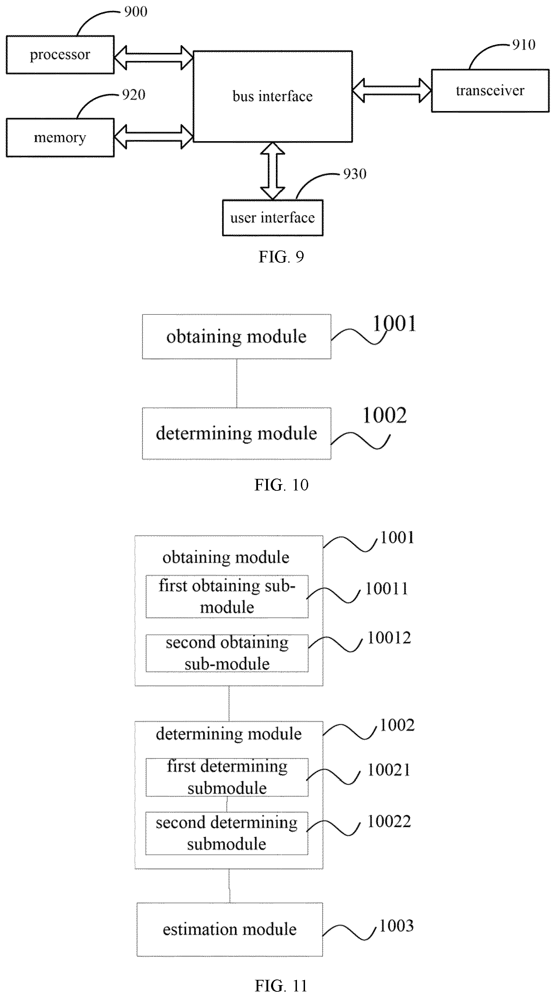

In some embodiments of the present disclosure, as shown in FIG. 9, a user equipment (UE) is provided and includes: a memory 920, a processor 900, a transceiver 910, a user interface 930, a bus interface, and a computer program stored on the memory 920 and executable on the processor 900. The processor 900 is used to read the program in the memory 920 and execute the following processes:
obtaining position information of a target subcarrier implicitly or explicitly indicated by a base station; where the target subcarrier is a subcarrier for mapping a target phase tracking reference signal (PTRS) port, among subcarriers occupied by a target demodulation reference signal (DMRS) port, and the target DMRS port is a DMRS port associated with the target PTRS port;
determining a target subcarrier according to the position information.

As shown in FIG. 9, the bus architecture may include any number of interconnected buses and bridges. Specifically, one or more processors demonstrated with processor 900 are coupled with various circuits of memory, which is demonstrated with memory 920. The bus architecture may also link various other circuits, such as, peripherals, voltage regulators, and power management circuits, as is known in the art. Thus, in the application, no further description is provided. The bus interface provides an interface. The transceiver 910 may be composed of multiple components, that is, including a transmitter and a receiver, which provide a unit for communicating with various other devices via the transmitting medium. For different user equipment, the user interface 930 may also be an interface capable of externally connecting required devices, including but not limited to a keypad, a display device, a speaker, a microphone, a joystick, and the like.

The processor 900 is responsible for managing the bus architecture and general processing, and the memory 920 can store data used by the processor 900 in performing operations.

The processor 900 is further used to read the program in the memory 920 to further implement the following steps: obtaining PTRS on the target subcarrier and performing phase noise estimation according to the PTRS.

The processor 900 is further used to read the program in the memory 920 to further implement the following steps: determining a target DMRS port associated with the target PTRS port; according to the position information, determining the target subcarrier from subcarriers occupied by the target DMRS port.

The processor 900 is further used to read the program in the memory 920 to further implement the following steps:
obtaining the position information transmitted by the base station via signaling through the transceiver;
where the position information includes: offset information of a preset reference subcarrier corresponding to the target DMRS port relative to the target subcarrier.

The processor 900 is further used to read the program in the memory 920 to further implement the following steps:
obtaining the position information of the target subcarrier by predefinition;
where the position information includes: position of a subcarrier for mapping the PTRS port among subcarriers occupied by each DMRS port; or, offset information of a subcarrier for mapping the PTRS port among subcarriers occupied by each DMRS port relative to a preset reference subcarrier corresponding to the each DMRS port.

The each DMRS port is a port in a preset DMRS ports group.

The DMRS ports in the same preset DMRS ports group occupy the same subcarriers, and the DMRS ports in different preset DMRS ports groups occupy different subcarriers.

In some embodiments of the present disclosure, a computer readable storage medium is provided and includes a computer program stored thereon. The computer program is executed by a processor to implement the following steps:
obtaining position information of a target subcarrier implicitly or explicitly indicated by a base station; where the target subcarrier is a subcarrier for mapping a target phase tracking reference signal (PTRS) port, among subcarriers occupied by a target demodulation reference signal (DMRS) port, and the target DMRS port is a DMRS port associated with the target PTRS port;
determining a target subcarrier according to the position information.

When the program is executed by the processor, all implementation manners of the above method embodiments applied to the UE can be implemented. To avoid repetition, details are not described herein again.

As shown in FIG. 10, one embodiment of the present disclosure further provides a reference signal transmission device, which is applied to a user equipment (UE), including:
an obtaining module 1001 used to obtain position information of a target subcarrier implicitly or explicitly indicated by a base station; where the target subcarrier is a subcarrier for mapping a target phase tracking reference signal (PTRS) port, among subcarriers occupied by a target demodulation reference signal (DMRS) port, and the target DMRS port is a DMRS port associated with the target PTRS port; and
a determining module 1002 used to determine a target subcarrier according to the position information.

As shown in FIG. 11, the reference signal transmission device of one embodiment of the present disclosure further includes: an estimation module 1003 used to obtain PTRS on the target subcarrier and perform phase noise estimation according to the PTRS.

In the reference signal transmission device of one embodiment of the present disclosure, the determining module 1002 includes:
a first determining submodule 10021 used to determine a target DMRS port associated with the target PTRS port;
a second determining submodule 10022 used to, according to the position information, determine the target subcarrier from subcarriers occupied by the target DMRS port.

In the reference signal transmission device of one embodiment of the present disclosure, the obtaining module 1001 includes:
a first obtaining sub-module 10011 used to obtain the position information transmitted by the base station via signaling;
where the position information includes: offset information of a preset reference subcarrier corresponding to the target DMRS port relative to the target subcarrier.

In the reference signal transmission device of one embodiment of the present disclosure, the obtaining module 1001 includes:
a second obtaining sub-module 10012 used to obtain the position information of the target subcarrier by predefinition;
where the position information includes: position of a subcarrier for mapping the PTRS port among subcarriers occupied by each DMRS port; or, offset information of a subcarrier for mapping the PTRS port among subcarriers occupied by each DMRS port relative to a preset reference subcarrier corresponding to the each DMRS port.

In the reference signal transmission device of one embodiment of the present disclosure, the each DMRS port is a port in a preset DMRS ports group.

The DMRS ports in the same preset DMRS ports group occupy the same subcarriers, and the DMRS ports in different preset DMRS ports groups occupy different subcarriers.

It should be noted that the device is a device corresponding to the above reference signal transmission method applied to the UE, and all implementation manners in the above method embodiments are applicable to the device embodiment, and the same technical effects can be achieved.

In various embodiments of the present disclosure, it should be understood that the size of serial numbers of the above procedures does not mean the execution sequence, and the execution sequence of various procedures should be determined by their function and internal logic, and shall not constitute any limitation on the implementation process of the embodiments of the present invention, as set out in the claims.

Foregoing describes optional implementation modes of the present disclosure. It should be pointed out that, for persons having ordinary skill in the art, several improvements and changes may be made. These improvements and changes should also be within the scope of the claims.

## Claims

1. A reference signal transmission method, applied to a base station, **characterized by** comprising:
implicitly or explicitly indicating (S101) to a user equipment, UE, position information of a target subcarrier for mapping a target phase tracking reference signal, PTRS, port, among subcarriers occupied by a target demodulation reference signal, DMRS, port; wherein the target DMRS port is a DMRS port associated with the target PTRS port;
wherein explicitly indicating (S101) to the UE, the position information of the target subcarrier for mapping the target PTRS port, among subcarriers occupied by the target DMRS port, includes:
transmitting the position information to the UE by signaling;
wherein the position information includes: offset information of a preset reference subcarrier corresponding to the target DMRS port relative to the target subcarrier; and
wherein implicitly indicating (S101) to the UE, the position information of the target subcarrier for mapping the target PTRS port, among subcarriers occupied by the target DMRS port, includes:
indicating the position information to the UE by protocol predefinition;
wherein the position information includes: position of the target subcarrier for mapping the target PTRS port among subcarriers occupied by the target DMRS port; or, offset information of the target subcarrier for mapping the target PTRS port among subcarriers occupied by the target DMRS port relative to a preset reference subcarrier corresponding to the target DMRS port;
wherein the indicating to the UE explicitly and the indicating to the UE implicitly are performed intermittently.

2. The method according to claim 1, further comprising: transmitting a PTRS to the UE on the target subcarrier.

3. The method according to claim 1, wherein before indicating to the UE, the position information of the target subcarrier for mapping the target PTRS port, among subcarriers occupied by the target DMRS port, the method further includes:
selecting the target subcarrier for mapping the target PTRS port from the subcarriers occupied by the target DMRS port; and
determining offset information of the target subcarrier relative to the preset reference subcarrier.

4. The method according to claim 1, wherein the target DMRS port is a port in a preset DMRS ports group;
the DMRS ports in the same preset DMRS ports group occupy the same subcarriers, and the DMRS ports in different preset DMRS ports groups occupy different subcarriers.

5. A reference signal transmission method, applied to a user equipment, UE, **characterized by** comprising:
obtaining (S301) position information of a target subcarrier implicitly or explicitly indicated by a base station; wherein the target subcarrier is a subcarrier for mapping a target phase tracking reference signal, PTRS, port, among subcarriers occupied by a target demodulation reference signal, DMRS, port, and the target DMRS port is a DMRS port associated with the target PTRS port; and
determining (S302) the target subcarrier according to the position information;
wherein the obtaining (S301) position information of the target subcarrier explicitly indicated by a base station, includes:
obtaining the position information transmitted by the base station via signaling;
wherein the position information includes: offset information of a preset reference subcarrier corresponding to the target DMRS port relative to the target subcarrier; and
wherein the obtaining (S301) position information of the target subcarrier implicitly indicated by a base station, includes:
obtaining the position information of the target subcarrier by predefinition;
wherein the position information includes: position of the target subcarrier for mapping the target PTRS port among subcarriers occupied by the target DMRS port; or, offset information of the target subcarrier for mapping the target PTRS port among subcarriers occupied by the target DMRS port relative to a preset reference subcarrier corresponding to the target DMRS port;
wherein the obtaining position information of the target subcarrier explicitly indicated by the base station, and the obtaining position information of the target subcarrier implicitly indicated by the base station are performed intermittently.

6. The method according to claim 5, further comprising: obtaining PTRS on the target subcarrier and performing phase noise estimation according to the PTRS.

7. The method according to claim 5, wherein determining the target subcarrier according to the position information, includes:
determining a target DMRS port associated with the target PTRS port; and
according to the position information, determining the target subcarrier from subcarriers occupied by the target DMRS port.

8. The method according to claim 5, wherein the target DMRS port is a port in a preset DMRS ports group;
the DMRS ports in the same preset DMRS ports group occupy the same subcarriers, and the DMRS ports in different preset DMRS ports groups occupy different subcarriers.

9. A computer readable storage medium comprising a computer program stored thereon, **characterized in that** the computer program is executed by a processor to implement the following steps:
implicitly or explicitly indicating (S101) to a user equipment, UE, position information of a target subcarrier for mapping a target phase tracking reference signal, PTRS, port, among subcarriers occupied by a target demodulation reference signal, DMRS, port; wherein the target DMRS port is a DMRS associated with the target PTRS port;
wherein explicitly indicating (S101) to the UE, the position information of the target subcarrier for mapping the target PTRS port, among subcarriers occupied by the target DMRS port, includes:
transmitting the position information to the UE by signaling;
wherein the position information includes: offset information of a preset reference subcarrier corresponding to the target DMRS port relative to the target subcarrier; and
wherein implicitly indicating (S101) to the UE, the position information of the target subcarrier for mapping the target PTRS port, among subcarriers occupied by the target DMRS port, includes:
indicating the position information to the UE by protocol predefinition;
wherein the position information includes: position of the target subcarrier for mapping the target PTRS port among subcarriers occupied by each DMRS port; or, offset information of the target subcarrier for mapping the target PTRS port among subcarriers occupied by the target DMRS port relative to a preset reference subcarrier corresponding to the target DMRS port;
wherein the indicating to the UE explicitly and the indicating to the UE implicitly are performed intermittently.

10. A computer readable storage medium comprising a computer program stored thereon, **characterized in that** the computer program is executed by a processor to implement the following steps:
obtaining (S301) position information of a target subcarrier implicitly or explicitly indicated by a base station; wherein the target subcarrier is a subcarrier for mapping a target phase tracking reference signal, PTRS, port, among subcarriers occupied by a target demodulation reference signal, DMRS, port, and the target DMRS port is a DMRS port associated with the target PTRS port; and
determining (S302) the target subcarrier according to the position information;
wherein the obtaining (S301) position information of the target subcarrier explicitly indicated by a base station, includes:
obtaining the position information transmitted by the base station via signaling;
wherein the position information includes: offset information of a preset reference subcarrier corresponding to the target DMRS port relative to the target subcarrier; and
wherein the obtaining (S301) position information of the target subcarrier implicitly indicated by a base station, includes:
obtaining the position information of the target subcarrier by predefinition;
wherein the position information includes: position of the target subcarrier for mapping the target PTRS port among subcarriers occupied by the target DMRS port; or, offset information of a subcarrier for mapping the target PTRS port among subcarriers occupied by the target DMRS port relative to a preset reference subcarrier corresponding to the target DMRS port;
wherein the obtaining position information of the target subcarrier explicitly indicated by the base station, and the obtaining position information of the target subcarrier implicitly indicated by the base station are performed intermittently.

11. A reference signal transmission device, applied to a base station, **characterized by** comprising:
an indication module (701) configured to, implicitly or explicitly indicate to a user equipment, UE, position information of a target subcarrier for mapping a target phase tracking reference signal, PTRS, port, among subcarriers occupied by a target demodulation reference signal, DMRS, port; wherein the target DMRS port is a DMRS port associated with the target PTRS port;
wherein the indication module (701) comprises:
a first indication submodule (7011) configured to transmit the position information to the UE by signaling;
wherein the position information includes: offset information of a preset reference subcarrier corresponding to the target DMRS port relative to the target subcarrier; and,
wherein the indication module includes:
a second indication submodule (7012) configured to indicate the position information to the UE by predefinition;
wherein the position information includes: position of the target subcarrier for mapping the target PTRS port among subcarriers occupied by the target DMRS port; or, offset information of a subcarrier for mapping the target PTRS port among subcarriers occupied by the target DMRS port relative to a preset reference subcarrier corresponding to the target DMRS port;
wherein the first indication submodule and the second indication submodule are intermittently used.

12. The device according to claim 11, wherein the target DMRS port is a port in a preset DMRS ports group;
the DMRS ports in the same preset DMRS ports group occupy the same subcarriers, and the DMRS ports in different preset DMRS ports groups occupy different subcarriers.

13. A reference signal transmission device, applied to a user equipment, UE, **characterized by** comprising:
an obtaining module (1001) configured to obtain position information of a target subcarrier implicitly or explicitly indicated by a base station; wherein the target subcarrier is a subcarrier for mapping a target phase tracking reference signal, PTRS, port, among subcarriers occupied by a target demodulation reference signal, DMRS, port, and the target DMRS port is a DMRS port associated with the target PTRS port; and
a determining module (1002) configured to determine the target subcarrier according to the position information;
wherein the obtaining module (1001) comprises:
a first obtaining submodule (10011) configured to obtain the position information transmitted by the base station via signaling;
wherein the position information includes: offset information of a preset reference subcarrier corresponding to the target DMRS port relative to the target subcarrier; and
wherein the obtaining module (1001) comprises:
a second obtaining submodule (10012) configured to obtain the position information of the target subcarrier by predefinition;
wherein the position information includes: position of the target subcarrier for mapping the target PTRS port among subcarriers occupied by the target DMRS port; or, offset information of a subcarrier for mapping the target PTRS port among subcarriers occupied by the target DMRS port relative to a preset reference subcarrier corresponding to the target DMRS port;
wherein the first obtaining submodule and the second obtaining submodule are intermittently used.

14. The device according to claim 13, wherein the target DMRS port is a port in a preset DMRS ports group;
the DMRS ports in the same preset DMRS ports group occupy the same subcarriers, and the DMRS ports in different preset DMRS ports groups occupy different subcarriers.

15. The device according to claim 13, wherein the determining module (1002) comprises:
a first determining submodule (10021) configured to determine a target DMRS port associated with the target PTRS port;
a second determining submodule (10022) configured to, according to the position information, determine the target subcarrier from subcarriers occupied by the target DMRS port.

## Patentansprüche

1. Referenzsignalübertragungsverfahren, das auf eine Basisstation angewendet wird, **gekennzeichnet dadurch, dass** es umfasst:
implizites oder explizites Anzeigen (S101), an einer Benutzereinrichtung, UE, von Positionsinformationen eines Zielunterträgers zum Abbilden eines Ziel-Phasenverfolgungsreferenzsignal-Port, PTRS-Port, unter Unterträgern, die von einem Ziel-Demodulationsreferenzsignal-Port, Ziel-DMRS-Port, belegt sind; wobei der Ziel-DMRS-Port ein DMRS-Port ist, der mit dem Ziel-PTRS-Port verknüpft ist;
wobei das explizite Anzeigen (S101) der Positionsinformationen des Zielunterträgers zum Abbilden des Ziel-PTRS-Port unter Unterträgern, die von dem Ziel-DMRS-Port belegt sind, an die UE einschließt:
Übertragen der Positionsinformationen an die UE durch Signalisierung;
wobei die Positionsinformationen einschließen: Versatzinformationen eines voreingestellten Referenzunterträgers, der dem Ziel-DMRS-Port relativ zu dem Zielunterträger entspricht; und
wobei das implizite Anzeigen (S101) an die UE der Positionsinformationen des Zielunterträgers zum Abbilden des Ziel-PTRS-Port unter Unterträgern, die von dem Ziel-DMRS-Port belegt sind, einschließt:
Anzeigen der Positionsinformationen an die UE durch Protokollvordefinition;
wobei die Positionsinformationen einschließen: Position des Zielunterträgers zum Abbilden des Ziel-PTRS-Port unter Unterträgern, die von dem Ziel-DMRS-Port belegt sind; oder Versatzinformationen des Zielunterträgers zum Abbilden des Ziel-PTRS-Port unter Unterträgern, die von dem Ziel-DMRS-Port belegt sind, relativ zu einem voreingestellten Referenzunterträger, der dem Ziel-DMRS-Port entspricht;
wobei das explizite Anzeigen an die UE und das implizite Anzeigen an die UE intermittierend durchgeführt werden.

2. Verfahren nach Anspruch 1, ferner umfassend: Übertragen eines PTRS an die UE auf dem Zielunterträger.

3. Verfahren nach Anspruch 1, wobei vor dem Anzeigen der Positionsinformationen des Zielunterträgers zum Abbilden des Ziel-PTRS-Port unter Unterträgern, die von dem Ziel-DMRS-Port belegt sind, an die UE, das Verfahren ferner einschließt:
Auswählen des Zielunterträgers zum Abbilden des Ziel-PTRS-Port aus den Unterträgern, die von dem Ziel-DMRS-Port belegt sind; und
Bestimmen von Versatzinformationen des Zielunterträgers relativ zu dem voreingestellten Referenzunterträger.

4. Verfahren nach Anspruch 1, wobei der Ziel-DMRS-Port ein Port in einer voreingestellten DMRS-Portgruppe ist;
die DMRS-Ports in derselben voreingestellten DMRS-Portgruppe dieselben Unterträger belegen, und die DMRS-Ports in unterschiedlichen voreingestellten DMRS-Portgruppen unterschiedliche Unterträger belegen.

5. Referenzsignalübertragungsverfahren, das auf eine Benutzereinrichtung, UE, angewendet wird, **gekennzeichnet dadurch, dass** es umfasst:
Erhalten (S301) von Positionsinformationen eines Zielunterträgers, die implizit oder explizit durch eine Basisstation angezeigt werden; wobei der Zielunterträger ein Unterträger zum Abbilden eines Ziel-Phasenverfolgungsreferenzsignal-Port, Ziel-PTRS-Port, unter Unterträgern ist, die von einem Ziel-Demodulationsreferenzsignal-Port, Ziel-DMRS-Port, belegt sind, und der Ziel-DMRS-Port ein DMRS-Port ist, der mit dem Ziel-PTRS-Port verknüpft ist; und
Bestimmen (S302) des Zielunterträgers gemäß den Positionsinformationen;
wobei das Erhalten (S301) von Positionsinformationen des Zielunterträgers, die explizit durch eine Basisstation angezeigt werden, einschließt:
Erhalten der Positionsinformationen, die durch die Basisstation über Signalisierung übertragen werden;
wobei die Positionsinformationen einschließen: Versatzinformationen eines voreingestellten Referenzunterträgers, der dem Ziel-DMRS-Port relativ zu dem Zielunterträger entspricht; und
wobei das Erhalten (S301) von Positionsinformationen des Zielunterträgers, die durch eine Basisstation implizit angezeigt werden, einschließt:
Erhalten der Positionsinformationen des Zielunterträgers durch Vordefinition;
wobei die Positionsinformationen einschließen: Position des Zielunterträgers zum Abbilden des Ziel-PTRS-Port unter Unterträgern, die von dem Ziel-DMRS-Port belegt sind; oder Versatzinformationen des Zielunterträgers zum Abbilden des Ziel-PTRS-Port unter Unterträgern, die von dem Ziel-DMRS-Port belegt sind, relativ zu einem voreingestellten Referenzunterträger, der dem Ziel-DMRS-Port entspricht;
wobei das Erhalten von Positionsinformationen des Zielunterträgers, die explizit durch die Basisstation angezeigt werden, und das Erhalten von Positionsinformationen des Zielunterträgers, die implizit durch die Basisstation angezeigt werden, intermittierend durchgeführt werden.

6. Verfahren nach Anspruch 5, ferner umfassend: Erhalten von PTRS auf dem Zielunterträger und Durchführen einer Phasenrauschschätzung gemäß dem PTRS.

7. Verfahren nach Anspruch 5, wobei das Bestimmen des Zielunterträgers gemäß den Positionsinformationen einschließt:
Bestimmen eines Ziel-DMRS-Port, der mit dem Ziel-PTRS-Port verknüpft ist; und
gemäß den Positionsinformationen, Bestimmen des Zielunterträgers aus Unterträgern, die von dem Ziel-DMRS-Port belegt werden.

8. Verfahren nach Anspruch 5, wobei der Ziel-DMRS-Port ein Port in einer voreingestellten DMRS-Portgruppe ist;
die DMRS-Ports in derselben voreingestellten DMRS-Portgruppe dieselben Unterträger belegen, und die DMRS-Ports in unterschiedlichen voreingestellten DMRS-Portgruppen unterschiedliche Unterträger belegen.

9. Computerlesbares Speichermedium, umfassend ein Computerprogramm, das darauf gespeichert ist, **dadurch gekennzeichnet, dass** das Computerprogramm durch einen Prozessor ausgeführt wird, um die folgenden Schritte zu implementieren:
implizites oder explizites Anzeigen (S101), an einer Benutzereinrichtung, UE, von Positionsinformationen eines Zielunterträgers zum Abbilden eines Ziel-Phasenverfolgungsreferenzsignal-Port, PTRS-Port, unter Unterträgern, die von einem Ziel-Demodulationsreferenzsignal-Port, Ziel-DMRS-Port, belegt sind; wobei der Ziel-DMRS-Port ein DMRS ist, der mit dem Ziel-PTRS-Port verknüpft ist;
wobei das explizite Anzeigen (S101) der Positionsinformationen des Zielunterträgers zum Abbilden des Ziel-PTRS-Port unter Unterträgern, die von dem Ziel-DMRS-Port belegt sind, an die UE einschließt:
Übertragen der Positionsinformationen an die UE durch Signalisierung;
wobei die Positionsinformationen einschließen: Versatzinformationen eines voreingestellten Referenzunterträgers, der dem Ziel-DMRS-Port relativ zu dem Zielunterträger entspricht; und
wobei das implizite Anzeigen (S101) an die UE der Positionsinformationen des Zielunterträgers zum Abbilden des Ziel-PTRS-Port unter Unterträgern, die von dem Ziel-DMRS-Port belegt sind, einschließt:
Anzeigen der Positionsinformationen an die UE durch Protokollvordefinition;
wobei die Positionsinformationen einschließen: Position des Zielunterträgers zum Abbilden des Ziel-PTRS-Port unter Unterträgern, die von jedem DMRS-Port belegt sind; oder Versatzinformationen des Zielunterträgers zum Abbilden des Ziel-PTRS-Port unter Unterträgern, die von dem Ziel-DMRS-Port belegt sind, relativ zu einem voreingestellten Referenzunterträger, der dem Ziel-DMRS-Port entspricht;
wobei das explizite Anzeigen an die UE und das implizite Anzeigen an die UE intermittierend durchgeführt werden.

10. Computerlesbares Speichermedium, umfassend ein Computerprogramm, das darauf gespeichert ist, **dadurch gekennzeichnet, dass** das Computerprogramm durch einen Prozessor ausgeführt wird, um die folgenden Schritte zu implementieren:
Erhalten (S301) von Positionsinformationen eines Zielunterträgers, die implizit oder explizit durch eine Basisstation angezeigt werden; wobei der Zielunterträger ein Unterträger zum Abbilden eines Ziel-Phasenverfolgungsreferenzsignal-Port, Ziel-PTRS-Port, unter Unterträgern ist, die von einem Ziel-Demodulationsreferenzsignal-Port, Ziel-DMRS-Port, belegt sind, und der Ziel-DMRS-Port ein DMRS-Port ist, der mit dem Ziel-PTRS-Port verknüpft ist; und
Bestimmen (S302) des Zielunterträgers gemäß den Positionsinformationen;
wobei das Erhalten (S301) von Positionsinformationen des Zielunterträgers, die explizit durch eine Basisstation angezeigt werden, einschließt:
Erhalten der Positionsinformationen, die durch die Basisstation über Signalisierung übertragen werden;
wobei die Positionsinformationen einschließen: Versatzinformationen eines voreingestellten Referenzunterträgers, der dem Ziel-DMRS-Port relativ zu dem Zielunterträger entspricht; und
wobei das Erhalten (S301) von Positionsinformationen des Zielunterträgers, die durch eine Basisstation implizit angezeigt werden, einschließt:
Erhalten der Positionsinformationen des Zielunterträgers durch Vordefinition;
wobei die Positionsinformationen einschließen: Position des Zielunterträgers zum Abbilden des Ziel-PTRS-Port unter Unterträgern, die von dem Ziel-DMRS-Port belegt sind; oder Versatzinformationen eines Unterträgers zum Abbilden des Ziel-PTRS-Port unter Unterträgern, die von den Ziel-DMRS-Port belegt sind, relativ zu einem voreingestellten Referenzunterträger, der dem Ziel-DMRS-Port entspricht;
wobei das Erhalten von Positionsinformationen des Zielunterträgers, die explizit durch die Basisstation angezeigt werden, und das Erhalten von Positionsinformationen des Zielunterträgers, die implizit durch die Basisstation angezeigt werden, intermittierend durchgeführt werden.

11. Referenzsignalübertragungsvorrichtung, die auf eine Basisstation angewendet wird, **gekennzeichnet dadurch, dass** es umfasst:
ein Anzeigemodul (701), das konfiguriert ist, um einer Benutzereinrichtung, UE, implizit oder explizit Positionsinformationen eines Zielunterträgers zum Abbilden eines Ziel-Phasenverfolgungsreferenzsignal-Port, Ziel-PTRS-Port, unter Unterträgern anzuzeigen, die von einem Ziel-Demodulationsreferenzsignal-Port, Ziel-DMRS-Port, belegt sind; wobei der Ziel-DMRS-Port ein DMRS-Port ist, der mit dem Ziel-PTRS-Port verknüpft ist;
wobei das Anzeigemodul (701) umfasst:
ein erstes Anzeigeuntermodul (7011), das konfiguriert ist, um die Positionsinformationen durch Signalisierung an die UE zu übertragen;
wobei die Positionsinformationen einschließen: Versatzinformationen eines voreingestellten Referenzunterträgers, der dem Ziel-DMRS-Port relativ zu dem Zielunterträger entspricht; und,
wobei das Anzeigemodul einschließt:
ein zweites Anzeigeuntermodul (7012), das konfiguriert ist, um die Positionsinformationen durch Vordefinition an die UE anzuzeigen;
wobei die Positionsinformationen einschließen: Position des Zielunterträgers zum Abbilden des Ziel-PTRS-Port unter Unterträgern, die von dem Ziel-DMRS-Port belegt sind; oder Versatzinformationen eines Unterträgers zum Abbilden des Ziel-PTRS-Port unter Unterträgern, die von den Ziel-DMRS-Port belegt sind, relativ zu einem voreingestellten Referenzunterträger, der dem Ziel-DMRS-Port entspricht;
wobei das erste Anzeigeuntermodul und das zweite Anzeigeuntermodul intermittierend verwendet werden.

12. Vorrichtung nach Anspruch 11, wobei der Ziel-DMRS-Port ein Port in einer voreingestellten DMRS-Portgruppe ist;
die DMRS-Ports in derselben voreingestellten DMRS-Portgruppe dieselben Unterträger belegen, und die DMRS-Ports in unterschiedlichen voreingestellten DMRS-Portgruppen unterschiedliche Unterträger belegen.

13. Referenzsignalübertragungsvorrichtung, die auf eine Benutzereinrichtung, UE, angewendet wird, **gekennzeichnet dadurch, dass** es umfasst:
ein Erhaltungsmodul (1001), das konfiguriert ist, um Positionsinformationen eines Zielunterträgers zu erhalten, die implizit oder explizit durch eine Basisstation angezeigt werden; wobei der Zielunterträger ein Unterträger zum Abbilden eines Ziel-Phasenverfolgungsreferenzsignal-Port, Ziel-PTRS-Port, unter Unterträgern ist, die von einem Ziel-Demodulationsreferenzsignal-Port, Ziel-DMRS-Port, belegt sind, und der Ziel-DMRS-Port ein DMRS-Port ist, der mit dem Ziel-PTRS-Port verknüpft ist; und
ein Bestimmungsmodul (1002), das konfiguriert ist, um den Zielunterträger gemäß den Positionsinformationen zu bestimmen;
wobei das Erhaltungsmodul (1001) umfasst:
ein erstes Erfassungsuntermodul (10011), das konfiguriert ist, um die Positionsinformationen zu erhalten, die durch die Basisstation über Signalisierung übertragen werden;
wobei die Positionsinformationen einschließen: Versatzinformationen eines voreingestellten Referenzunterträgers, der dem Ziel-DMRS-Port relativ zu dem Zielunterträger entspricht; und
wobei das Erhaltungsmodul (1001) umfasst:
ein zweites Erhaltungsuntermodul (10012), das konfiguriert ist, um die Positionsinformationen des Zielunterträgers durch Vordefinition zu erhalten;
wobei die Positionsinformationen einschließen: Position des Zielunterträgers zum Abbilden des Ziel-PTRS-Port unter Unterträgern, die von dem Ziel-DMRS-Port belegt sind; oder Versatzinformationen eines Unterträgers zum Abbilden des Ziel-PTRS-Port unter Unterträgern, die von den Ziel-DMRS-Port belegt sind, relativ zu einem voreingestellten Referenzunterträger, der dem Ziel-DMRS-Port entspricht;
wobei das erste Erhaltungsuntermodul und das zweite Erhaltungsuntermodul intermittierend verwendet werden.

14. Vorrichtung nach Anspruch 13, wobei der Ziel-DMRS-Port ein Port in einer voreingestellten DMRS-Portgruppe ist;
die DMRS-Ports in derselben voreingestellten DMRS-Portgruppe dieselben Unterträger belegen, und die DMRS-Ports in unterschiedlichen voreingestellten DMRS-Portgruppen unterschiedliche Unterträger belegen.

15. Vorrichtung nach Anspruch 13, wobei das Bestimmungsmodul (1002) umfasst:
ein erstes Bestimmungsuntermodul (10021), das konfiguriert ist, um einen Ziel-DMRS-Port zu bestimmen, der mit dem Ziel-PTRS-Port verknüpft ist;
ein zweites Bestimmungsuntermodul (10022), das konfiguriert ist, um gemäß den Positionsinformationen den Zielunterträger aus Unterträgern zu bestimmen, die von dem Ziel-DMRS-Port belegt sind.

## Revendications

1. Procédé de transmission de signal de référence, appliqué à une station de base, **caractérisé par le fait qu'**il comprend :
l'indication implicite ou explicite (S101), à un équipement utilisateur, UE, d'informations de position d'une sous-porteuse cible pour mapper un port de signal de référence de suivi de phase, PTRS, cible, parmi des sous-porteuses occupées par un port de signal de référence de démodulation, DMRS, cible ; dans lequel le port DMRS cible est un port DMRS associé au port PTRS cible ;
dans lequel l'indication explicite (S101), à l'UE, des informations de position de la sous-porteuse cible pour mapper le port PTRS cible, parmi des sous-porteuses occupées par le port DMRS cible, comporte :
la transmission des informations de position à l'UE par signalisation ;
dans lequel les informations de position comportent : des informations de décalage d'une sous-porteuse de référence prédéfinie correspondant au port DMRS cible par rapport à la sous-porteuse cible ; et
dans lequel l'indication implicite (S101), à l'UE, des informations de position de la sous-porteuse cible pour mapper le port PTRS cible, parmi des sous-porteuses occupées par le port DMRS cible, comporte :
l'indication des informations de position à l'UE par prédéfinition de protocole ;
dans lequel les informations de position comportent : une position de la sous-porteuse cible pour mapper le port PTRS cible parmi des sous-porteuses occupées par le port DMRS cible ; ou, des informations de décalage de la sous-porteuse cible pour mapper le port PTRS cible parmi des sous-porteuses occupées par le port DMRS cible par rapport à une sous-porteuse de référence prédéfinie correspondant au port DMRS cible ;
dans lequel l'indication explicite à l'UE et l'indication implicite à l'UE sont réalisées par intermittence.

2. Procédé selon la revendication 1, comprenant en outre : la transmission d'un PTRS à l'UE sur la sous-porteuse cible.

3. Procédé selon la revendication 1, dans lequel avant d'indiquer, à l'UE, les informations de position de la sous-porteuse cible pour mapper le port PTRS cible, parmi des sous-porteuses occupées par le port DMRS cible, le procédé comporte en outre :
la sélection de la sous-porteuse cible pour mapper le port PTRS cible parmi des sous-porteuses occupées par le port DMRS cible ; et
la détermination d'informations de décalage de la sous-porteuse cible par rapport à la sous-porteuse de référence prédéfinie.

4. Procédé selon la revendication 1, dans lequel le port DMRS cible est un port dans un groupe de ports DMRS prédéfinis ;
les ports DMRS dans le même groupe de ports DMRS prédéfinis occupent les mêmes sous-porteuses, et les ports DMRS dans différents groupes de ports DMRS prédéfinis occupent des sous-porteuses différentes.

5. Procédé de transmission de signal de référence, appliqué à un équipement utilisateur, UE, **caractérisé par le fait qu'**il comprend :
l'obtention (S301) d'informations de position d'une sous-porteuse cible indiquées de manière implicite ou explicite par une station de base ; dans lequel la sous-porteuse cible est une sous-porteuse pour mapper un port de signal de référence de suivi de phase, PTRS, cible, parmi des sous-porteuses occupées par un port de signal de référence de démodulation, DMRS, cible, et le port DMRS cible est un port DMRS associé au port PTRS cible ; et
la détermination (S302) de la sous-porteuse cible selon les informations de position ;
dans lequel l'obtention (S301) d'informations de position de la sous-porteuse cible indiquées de manière explicite par une station de base comporte :
l'obtention des informations de position transmises par la station de base par l'intermédiaire d'une signalisation ;
dans lequel les informations de position comportent : des informations de décalage d'une sous-porteuse de référence prédéfinie correspondant au port DMRS cible par rapport à la sous-porteuse cible ; et
dans lequel l'obtention (S301) d'informations de position de la sous-porteuse cible indiquées de manière implicite par une station de base comporte :
l'obtention des informations de position de la sous-porteuse cible par prédéfinition ;
dans lequel les informations de position comportent : une position de la sous-porteuse cible pour mapper le port PTRS cible parmi des sous-porteuses occupées par le port DMRS cible ; ou, des informations de décalage de la sous-porteuse cible pour mapper le port PTRS cible parmi des sous-porteuses occupées par le port DMRS cible par rapport à une sous-porteuse de référence prédéfinie correspondant au port DMRS cible ;
dans lequel l'obtention d'informations de position de la sous-porteuse cible indiquées de manière explicite par la station de base, et l'obtention d'informations de position de la sous-porteuse cible indiquées de manière implicite par la station de base sont réalisées par intermittence.

6. Procédé selon la revendication 5, comprenant en outre : l'obtention d'un PTRS sur la sous-porteuse cible et la réalisation d'une estimation de bruit de phase selon le PTRS.

7. Procédé selon la revendication 5, dans lequel la détermination de la sous-porteuse cible selon les informations de position comporte :
la détermination un port DMRS cible associé au port PTRS cible ; et
selon les informations de position, la détermination de la sous-porteuse cible à partir de sous-porteuses occupées par le port DMRS cible.

8. Procédé selon la revendication 5, dans lequel le port DMRS cible est un port dans un groupe de ports DMRS prédéfinis ;
les ports DMRS dans le même groupe de ports DMRS prédéfinis occupent les mêmes sous-porteuses, et les ports DMRS dans différents groupes de ports DMRS prédéfinis occupent des sous-porteuses différentes.

9. Support de stockage lisible par ordinateur comprenant un programme informatique stocké sur celui-ci, **caractérisé en ce que** le programme informatique est exécuté par un processeur pour mettre en œuvre les étapes suivantes :
l'indication implicite ou explicite (S101), à un équipement utilisateur, UE, d'informations de position d'une sous-porteuse cible pour mapper un port de signal de référence de suivi de phase, PTRS, cible, parmi des sous-porteuses occupées par un port de signal de référence de démodulation, DMRS, cible ; dans lequel le port DMRS cible est un DMRS associé au port PTRS cible ;
dans lequel l'indication explicite (S101), à l'UE, des informations de position de la sous-porteuse cible pour mapper le port PTRS cible, parmi des sous-porteuses occupées par le port DMRS cible, comporte :
la transmission des informations de position à l'UE par signalisation ;
dans lequel les informations de position comportent : des informations de décalage d'une sous-porteuse de référence prédéfinie correspondant au port DMRS cible par rapport à la sous-porteuse cible ; et
dans lequel l'indication implicite (S101), à l'UE, des informations de position de la sous-porteuse cible pour mapper le port PTRS cible, parmi des sous-porteuses occupées par le port DMRS cible, comporte :
l'indication des informations de position à l'UE par prédéfinition de protocole ;
dans lequel les informations de position comportent : une position de la sous-porteuse cible pour mapper le port de PTRS cible parmi des sous-porteuses occupées par chaque port de DMRS ; ou, des informations de décalage de la sous-porteuse cible pour mapper le port PTRS cible parmi des sous-porteuses occupées par le port DMRS cible par rapport à une sous-porteuse de référence prédéfinie correspondant au port DMRS cible ;
dans lequel l'indication explicite à l'UE et l'indication implicite à l'UE sont réalisées par intermittence.

10. Support de stockage lisible par ordinateur comprenant un programme informatique stocké sur celui-ci, **caractérisé en ce que** le programme informatique est exécuté par un processeur pour mettre en œuvre les étapes suivantes :
l'obtention (S301) d'informations de position d'une sous-porteuse cible indiquées de manière implicite ou explicite par une station de base ; dans lequel la sous-porteuse cible est une sous-porteuse pour mapper un port de signal de référence de suivi de phase, PTRS, cible, parmi des sous-porteuses occupées par un port de signal de référence de démodulation, DMRS, cible, et le port DMRS cible est un port DMRS associé au port PTRS cible ; et
la détermination (S302) de la sous-porteuse cible selon les informations de position ;
dans lequel l'obtention (S301) d'informations de position de la sous-porteuse cible indiquées de manière explicite par une station de base comporte :
l'obtention des informations de position transmises par la station de base par l'intermédiaire d'une signalisation ;
dans lequel les informations de position comportent : des informations de décalage d'une sous-porteuse de référence prédéfinie correspondant au port DMRS cible par rapport à la sous-porteuse cible ; et
dans lequel l'obtention (S301) d'informations de position de la sous-porteuse cible indiquées de manière implicite par une station de base comporte :
l'obtention des informations de position de la sous-porteuse cible par prédéfinition ;
dans lequel les informations de position comportent : une position de la sous-porteuse cible pour mapper le port PTRS cible parmi des sous-porteuses occupées par le port DMRS cible ; ou, des informations de décalage d'une sous-porteuse pour mapper le port de PTRS cible parmi des sous-porteuses occupées par le port de DMRS cible par rapport à une sous-porteuse de référence prédéfinie correspondant au port de DMRS cible ;
dans lequel l'obtention d'informations de position de la sous-porteuse cible indiquées de manière explicite par la station de base, et l'obtention d'informations de position de la sous-porteuse cible indiquées de manière implicite par la station de base sont réalisées par intermittence.

11. Dispositif de transmission de signal de référence, appliqué à une station de base, **caractérisé par le fait qu'**il comprend :
un module d'indication (701) configuré pour indiquer de manière implicite ou explicite, à un équipement utilisateur, UE, des informations de position d'une sous-porteuse cible pour mapper un port de signal de référence de suivi de phase, PTRS, cible, parmi des sous-porteuses occupées par un port de signal de référence de démodulation, DMRS, cible ; dans lequel le port DMRS cible est un port DMRS associé au port PTRS cible ;
dans lequel le module d'indication (701) comprend :
un premier sous-module d'indication (7011) configuré pour transmettre les informations de position à l'UE par signalisation ;
dans lequel les informations de position comportent : des informations de décalage d'une sous-porteuse de référence prédéfinie correspondant au port DMRS cible par rapport à la sous-porteuse cible ; et,
dans lequel le module d'indication comporte :
un second sous-module d'indication (7012) configuré pour indiquer les informations de position à l'UE par prédéfinition ;
dans lequel les informations de position comportent : une position de la sous-porteuse cible pour mapper le port PTRS cible parmi des sous-porteuses occupées par le port DMRS cible ; ou, des informations de décalage d'une sous-porteuse pour mapper le port de PTRS cible parmi des sous-porteuses occupées par le port de DMRS cible par rapport à une sous-porteuse de référence prédéfinie correspondant au port de DMRS cible ;
dans lequel le premier sous-module d'indication et le second sous-module d'indication sont utilisés par intermittence.

12. Dispositif selon la revendication 11, dans lequel le port DMRS cible est un port dans un groupe de ports DMRS prédéfinis ;
les ports DMRS dans le même groupe de ports DMRS prédéfinis occupent les mêmes sous-porteuses, et les ports DMRS dans différents groupes de ports DMRS prédéfinis occupent des sous-porteuses différentes.

13. Dispositif de transmission de signal de référence, appliqué à un équipement utilisateur, UE, **caractérisé par le fait qu'**il comprend :
un module d'obtention (1001) configuré pour obtenir des informations de position d'une sous-porteuse cible indiquées de manière implicite ou explicite par une station de base ; dans lequel la sous-porteuse cible est une sous-porteuse pour mapper un port de signal de référence de suivi de phase, PTRS, cible, parmi des sous-porteuses occupées par un port de signal de référence de démodulation, DMRS, cible, et le port DMRS cible est un port DMRS associé au port PTRS cible ; et
un module de détermination (1002) configuré pour déterminer la sous-porteuse cible selon les informations de position ;
dans lequel le module d'obtention (1001) comprend :
un premier sous-module d'obtention (10 011) configuré pour obtenir les informations de position transmises par la station de base par l'intermédiaire d'une signalisation ;
dans lequel les informations de position comportent : des informations de décalage d'une sous-porteuse de référence prédéfinie correspondant au port DMRS cible par rapport à la sous-porteuse cible ; et
dans lequel le module d'obtention (1001) comprend :
un second sous-module d'obtention (10 012) configuré pour obtenir les informations de position de la sous-porteuse cible par prédéfinition ;
dans lequel les informations de position comportent : une position de la sous-porteuse cible pour mapper le port PTRS cible parmi des sous-porteuses occupées par le port DMRS cible ; ou, des informations de décalage d'une sous-porteuse pour mapper le port de PTRS cible parmi des sous-porteuses occupées par le port de DMRS cible par rapport à une sous-porteuse de référence prédéfinie correspondant au port de DMRS cible ;
dans lequel le premier sous-module d'obtention et le second sous-module d'obtention sont utilisés par intermittence.

14. Dispositif selon la revendication 13, dans lequel le port DMRS cible est un port dans un groupe de ports DMRS prédéfinis ;
les ports DMRS dans le même groupe de ports DMRS prédéfinis occupent les mêmes sous-porteuses, et les ports DMRS dans différents groupes de ports DMRS prédéfinis occupent des sous-porteuses différentes.

15. Dispositif selon la revendication 13, dans lequel le module de détermination (1002) comprend :
un premier sous-module de détermination (10021) configuré pour déterminer un port DMRS cible associé au port PTRS cible ;
un second sous-module de détermination (10022) configuré pour, selon les informations de position, déterminer la sous-porteuse cible parmi des sous-porteuses occupées par le port DMRS cible.
